# EUROPEAN PATENT SPECIFICATION

(11) **EP 2 679 032 B1**
(45) Date of publication and mention of the grant of the patent: **08.05.2019**
(21) Application number: 12749179.3
(22) Date of filing: 04.01.2012
(51) Int. Cl.: H04W 8/10, H04W 80/04

(54) **METHOD AND DEVICE FOR ACQUIRING AND USING LOCATION INFORMATION**
VERFAHREN UND VORRICHTUNG ZUR ERFASSUNG UND VERWENDUNG VON STANDORTINFORMATIONEN
PROCÉDÉ ET DISPOSITIF D'ACQUISITION ET D'UTILISATION D'INFORMATIONS DE POSITION

(30) Priority: 22.02.2011 CN 201110046825
(43) Date of publication of application: 01.01.2014
(73) Proprietor: Alcatel Lucent, 91620 Nozay (FR)
(72) Inventor: LI, Xiang Yang, Shanghai 201206 (CN); CAI, Yigang, Naperville, Illinois 60564 (US)
(74) Representative: Novagraaf Technologies
(86) International application number: PCT/IB2012/000156
(87) International publication number: WO 2012/114171

(56) References cited:
- WO-A1-2006/118495
- CN-A- 101 686 540
- US-A1- 2010 041 418
- US-A1- 2010 285 797
- NTT DOCOMO: "3GPP TSG SA WG2 Meeting #83; S2-110322; Cell ID retrieval based on HSS in case of terminating call", 3GPP DRAFT; S2-110322_CELL ID RETRIEVAL BASED ON HSS IN CASE OF TERMINATING CALL_R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), XP050523588, [retrieved on 2011-02-15]
- ALCATEL-LUCENT: "3GPP TSG SA WG2 Meeting #83; S2-110617; Update to add csg-id to 23.842", 3GPP DRAFT; S2-110617 ADD CSG-ID TO 23842 CLAUSES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), XP050523815, [retrieved on 2011-02-15]
- NOKIA SIEMENS NETWORKS ET AL: "3GPP TSG SA WG5 Meeting #73; S5-102561; Work Item on Network provided location information for IMS Charging", 3GPP DRAFT; S5-102561 WID ON NETWORK PROVIDED LOCATION INFORMATION FOR IMS CHARGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. New Delhi, India; 20100823 - 20100827, 27 August 2010 (2010-08-27), XP050646327, [retrieved on 2010-08-27]

## Description

### Field of the Invention

The present invention relates to an Internet protocol multimedia subsystem and in particular to methods and devices for processing location information of a user equipment in an Internet protocol multimedia subsystem.

### Background of the Invention

Location information is important in charging for mobile voice and data. The location information typically includes the cell ID of a cell, or the sector ID of a sector, where a user equipment resides.

In a traditional voice communication network, a Mobile Switching Center (MSC) typically provides a charging system with a cell ID or a sector ID for location-based billing and charging. The cell ID or the sector ID provided from the MSC is considered trusted.

In an LTE network, a base station (eNodeB or eNB equivalent to an NB in GPRS and UMTS networks) provides a Signaling Gateway (S-GW) or a Public Data Network Gateway (PDN-GW or simply P-GW) with user location information (e.g., a User Location Identifier, ULI) via the GPRS Tunnel Protocol (GTP). However the LTE belongs to a bearer layer transparent to a core network, and therefore even if the URL is trusted user location information, it is impossible for an IMS network to acquire the trusted ULI.

In an IP Multimedia Subsystem (IMS) network, cell ID information currently provided from a user equipment in the header of P-Access-Network-Information in a Session Initiation Protocol (SIP) message is acquired via the Ro interface of online charging and the Rf interface of offline charging in the Diameter protocol. The P-Access-Network-Information includes an access type and access information provided from the user equipment. However a cell ID provided from the UE can not be considered trusted. The charging research team of the 3GPP standard believes that a very serious problem may result from the use of a non-trusted cell ID for location-based billing and charging. Non-trusted location information may have a great influence upon location-based charging over the IMS network. A non-trusted cell ID can not be adopted over the IMS network because:
- Current location information is required for an IMS charging record. A charging data record, i.e., a Charging Data Record (CDR) generated from the IMS, will include location information from the network, e.g., a cell ID, etc. This applies to a charging data record from any user and/or session.
- A VoIP emergent communication service depends upon precise location information from the IMS.
- Location information is required for an IMS charging system to charge for a localized service. For correct billing and charging, an Application Server (AS) in the IMS system has to be capable of acquiring location information provided from the network.

In the prior art, if a subscription for a location change notice is active, then a public data network gateway or a Gateway GPRS Support Node (GGSN) can acquire current cell ID information. However this mechanism is inefficient. The use of the mechanism may result in a considerable load of messages in the Packet Switch (PS) domain. Furthermore neither the P-GW nor the GGSN can transport the acquired trusted cell ID directly to a Home Subscriber Server (HSS) or any other application server in the IMS network.

For the existing standards and practical applications, charging based upon trusted location information in the SIP protocol has been absent so far in IMS and LTE networks.

Document 3GPP TSG SA WG2 Meeting #83, TD S2-110322, NTT DoCoMo, discloses cell ID retrieval based on HSS in case of a terminating call. The HSS, upon request from a S-CSCF/AS, provides obtained trusted UE location information to the requesting network entity. However, said trusted location information may be outdated.

### Summary of the Invention

The invention provides methods and devices for using trusted location information of a user equipment provided from a base station in an IP multimedia subsystem.

The invention is defined by the subject-matter of the independent claims.

Preferred embodiments are set out in the dependent claims.

Particularly a mobility management entity acquires trusted user location information from a base station and provides a home subscriber server with the trusted location information. With enhanced interfaces between the home subscriber server, on one side, and a serving-call/session control function (S-CSCF), a proxy subscriber server and the serving-call/session control function(S-CSCF), an application server, an online charging system(OCS) and an offline charging system (OFCS)respectively, on the other side, the home subscriber server can provide these network elements with the trusted user location information, and also with enhanced interfaces between the online charging system and the offline charging system, on one side, and the serving-call/session control function, the proxy subscriber server and the serving-call/session control function, and the application server respectively, on the other side, transmission of the trusted user location information via these interfaces can be supported.

According to a first aspect of the disclosure, there is provided a method, in a mobility management entity of a core network, for processing location information of a user equipment, which includes the steps of acquiring the location information of the user equipment provided by a base station; and providing the home subscriber server with the location information.

According to a second aspect of the disclosure, there is provided a method, in a home subscriber server of a core network of an internet protocol multimedia subsystem, for processing location information of a user equipment, which includes the steps of: receiving the location information of the user equipment from a mobility management entity and storing the location information in a subscriber database; receiving from a first network entity related to the location information a request message for requesting the location information, wherein the request message requests the location information of the user equipment provided by a base station; and providing the location information to the first network entity requesting the location information.

According to a third aspect of the disclosure, there is provided a method, in a second network entity of a core network of an internet protocol multimedia subsystem, for processing location information of a user equipment, which includes the steps of: transmitting a request message to a home subscriber server to request the location information of the user equipment, wherein the request message requests the location information of the user equipment generated by a base station; and receiving from the home subscriber server the location information, wherein the location information includes the cell identity of a cell, or the sector identity of a sector, where the user equipment resides.

According to a fourth aspect of the disclosure, there is provided a first device, in a mobility management entity of a core network, for processing location information of a user equipment, which includes: acquisition means for acquiring the location information of the user equipment provided by a base station; and first providing means for providing the home subscriber server with the location information.

According to a fifth aspect of the disclosure, there is provided a second device, in a home subscriber server of a core network of an internet protocol multimedia subsystem, for processing location information of a user equipment, which includes: first reception means for receiving the location information of the user equipment from a mobility management entity and storing the location information in a subscriber database, and for receiving from a first network entity related to the location information a request message for requesting the location information, wherein the request message requests the location information of the user equipment provided by a base station; and second providing means for providing the location information to the first network entity requesting the location information.

According to a sixth aspect of the disclosure, there is provided a third device, in a second network entity of a core network of an internet protocol multimedia subsystem, for processing location information of a user equipment, which includes: transmission means for transmitting a request message to a home subscriber server to request the location information of the user equipment, wherein the request message requests the location information of the user equipment generated by a base station; and second reception means for receiving from the home subscriber server the location information, wherein the location information includes the cell identity of a cell, or the sector identity of a sector, where the user equipment resides.

With the solutions according to the embodiments of the invention, the trusted user location information can be transmitted over an IMS network, and preferably billing and charging can be based upon the trusted user location information so that charging based upon the user location information can reflect the real location of a user and hence be more accurate.

### Brief Description of the Drawings

Other features, objects and advantages of the invention will become more apparent upon reviewing the following detailed description of non-limiting embodiments thereof with reference to the drawings in which:
Fig.1 illustrates a schematic structural diagram of a network topology according to an embodiment of the invention;
Fig.2 illustrates a flow chart of a systematic method according to an embodiment of the invention; and
Fig.3 illustrates a block diagram of a device according to an embodiment of the invention.

Wherein, identical or like reference numerals denote identical or like step features and/or means/modules.

### Detailed Description of the Invention

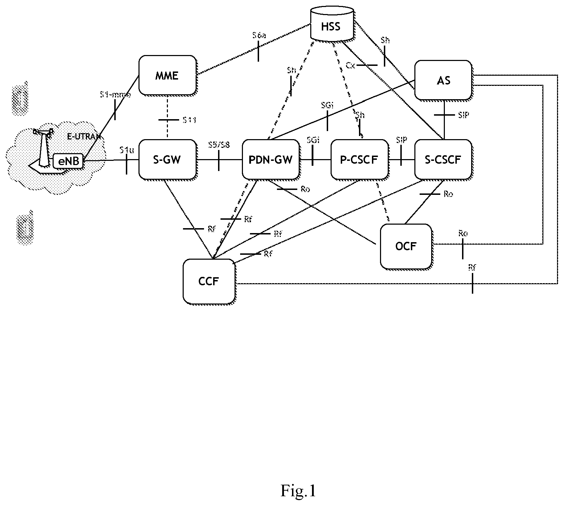

Fig.1 illustrates a schematic structural diagram of a network topology according to an embodiment of the invention. Fig.1 illustrates a structural diagram of a charging system in LTE and IMS network. Particularly the LTE network is a bearer network responsible for transmission of data and signaling and includes respective gateways, e.g., an S-GW, a P-GW, etc., a base station in an access network (simply an NB in a 2G network or an evolved NB (simply eNB) in a 3G network), and a Mobility Management Entity (MME). The IMS network includes a Home Subscriber Server (HSS), a Proxy-Call/Session Control Function (P-CSCF), a Serving-Call/Session Control Function (S-CSCF), an Offline Charging System (OFCS), an Online Charging System (OCS) and an Application Server (AS). Particularly the Diameter protocol interfaces s6a, Cx and Sh related to the HSS are enhanced to support a new parameter, i.e., trusted location information. The Diameter protocols Ro interface for online charging and the Rf interface for offline charging are enhanced to support a new parameter, i.e., trusted location information.

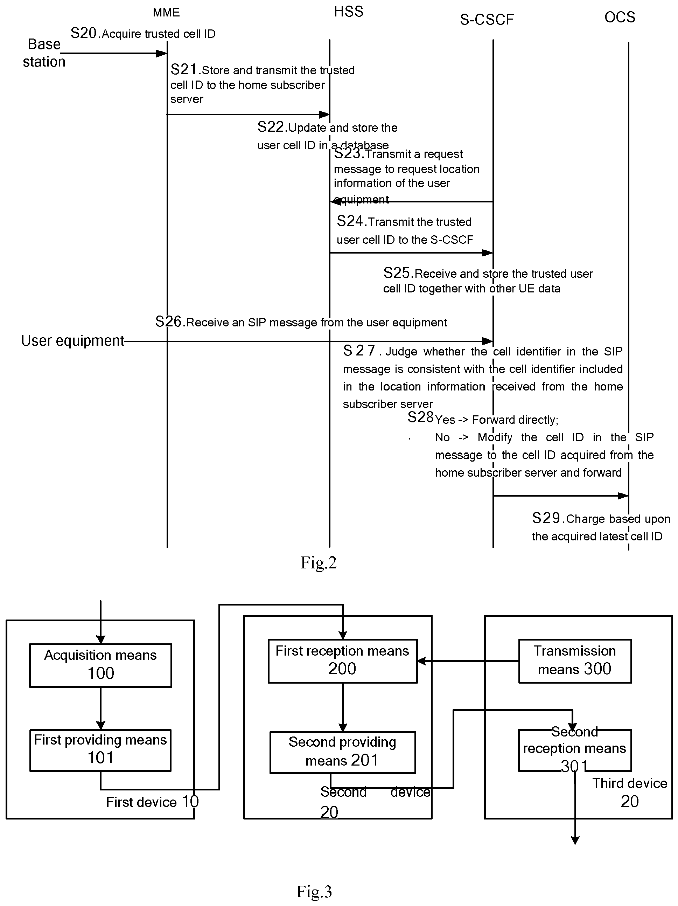

Fig.2 illustrates a flow chart of a systematic method according to an embodiment of the invention. Firstly in the step S20, the mobility management entity in the LTE network acquires a trusted cell ID from the base station through the reference point s1. The trusted cell ID is an example of trusted location information of a user equipment provided from the base station. Of course those skilled in the art can appreciate the trusted location information of the user equipment may further include the sector identifier of a sector where the user equipment resides, and the trusted cell ID is given in a Global eNB ID Information Element (IE) to identify globally the base station. Table 1 depicts a specific description of the Global eNB ID IE. Reference can be made to 3GPP TS 36.413 Section 9.2.1.37a for details.

**Table 1**

| **IE/Group Name** | **Presence** | **Range** | **IE Type and Reference** | **Semantic Description** |
|---|---|---|---|---|
| PLMN identifier | Mandatory | | 9.2.3.8 | |
| Selected eNB ID | Mandatory | | | |
| >Macro eNB ID | | | | |
| >>Macro eNB ID | Mandatory | | Bit string (20) | Equal to 20 leftmost bits of the cell identifier IE included in the *E-UTRAN CGI* IE of each cell served by the eNB (See 3GPP TS 36.413 section 9.2.1.38) |
| >Home eNB ID | | | | |
| >>Home eNB ID | Mandatory | | Bit string (28) | Equal to the cell identifier IE included in the *E-UTRAN CGI* IE of each cell served by the eNB (See 3GPP TS 36.413 section 9.2.1.38) |

Then in the step S21, the mobility management entity stores the trusted cell ID and transmits the trusted cell ID to the home subscriber server through the reference point s6a.

Then in the step S22, the home subscriber server updates and stores the user cell ID in a database.

Specifically, Table 2 depicts subscriber profile data of the home subscriber server to support register an LTE user equipment. The s6a interface and the subscriber database of the home subscriber server are enhanced to support a service and charging based upon trusted location information.

**Table 2**

| Field | Description |
|---|---|
| IMSI | International Mobile Subscriber Identifier (IMSI) which is a main reference key |
| MSISDN | Mobile Subscriber ISDN number which is a basic MSISDN of the UE (Presence of the MSISDN is optional) |
| IMEI / IMEISV | International Mobile Equipment Identity - Software Version Number |
| MME Address | The IP address of the MME currently serving the UE |
| PDN Address | It indicates an IP address of the subscriber |
| **Cell ID** | **It indicates a current trusted cell ID of the mobile user equipment received the from MME via s6a (the MME receives. the eNodeB ID from the eNodeB via s1) (A new field which is not defined in the standard)** |
| PDN Gate Identifier | The identifier of the PDN Gateway (GW) used for the Access Point Name (APN). The PDN GW identifier may be a (Fully Qualified Domain Name (FQDN) or an IP address. The PDN GW identifier refers to a specific PDN GW |
| PDN Gateway Allocation Type | It indicates whether the PDN GW is statically allocated or dynamically selected by another node. A statically allocated PDN GW keeps unchanged during any PDN GW selection. |

Particularly the cell ID is a trusted cell ID of the user equipment. A format of the cell ID can be as depicted in Table 1.

In another embodiment, the home subscriber server stores a timestamp for receiving the trusted cell ID in the database, where the timestamp identifies the time when the cell ID of the user equipment is received and stored by the home subscriber server.

Then a first network entity transmits a request message to the home subscriber server to request location information of the user equipment, wherein the request message requests the location information of the user equipment generated by the base station. The first network entity is related to the location information and uses the location information to perform a relevant processing operation. The first network entity includes a proxy-call/session control function, a serving-call/session control function, an application server, an offline charging system and an online charging system. Specific descriptions will be given below respectively with respect to the different network entities.

Firstly interaction between the serving-call/session control function and the home subscriber server, i.e., the Cx Diameter interface between the serving-call/session control function and the home subscriber server, will be described as an example.

Firstly in the step S23, the serving-call/session control function requests in a Diameter Cx Server Assignment Request (SAR) command the home subscriber server for profile information of a user.

Then in the step S24, the home subscriber server responds with a Cx Server Assignment Answer (SAA) command including the trusted cell ID or sector ID acquired in the step S22 (or the location information in the Attribute Value Pair (AVP)).

The Cx interface data reference (see a user profile in Table E.1 of 3GPP TS 29.228) shall be enhanced to support a new data reference value, that is, the new data reference value shall be included in information transmitted via the Cx interface, and for example, an XML label corresponding to the new data reference value is represented as a trustedCellID, and an operation allowed for the new data reference value is SAA.

Then in the step S25, the S-CSCF receives Cx SAA with the trustedCellID and stores it together with other UE data.

Then in the step S26, the S-CSCF receives a Session Initiation Protocol (SIP) invite message from the user equipment, where the header of P-Access-Network-Information in the Session Initiation Protocol invite message includes the cell identifier.

Then in the step S27, the S-CSCF judges whether the cell identifier in the header of P-Access-Network-Information is consistent with the cell identifier or the sector identifier included in the location information stored in the user profile database, which is received from the home subscriber server.

If both are consistent, then in the step S28, the S-CSCF transmits the cell identifier directly to a next-hop network device.

In another embodiment, the S-CSCF also transmits the timestamp corresponding to the cell identifier to the next-hop network device in addition to the cell identifier. The timestamp indicates the time when the HSS receives and stores the cell identifier in the local database, and the HSS transmits the timestamp to the S-CSCF in a Cx SAA message.

Otherwise, when the two identifiers are inconsistent, the S-CSCF modifies the cell identifier in the header of P-Access-Network-Information of the Session Initiation Protocol invitate message to the cell identifier or the sector identifier included in the location information received from the home subscriber server and transmits the modified Session Initiation Protocol invitate message to the next-hop network device.

In another embodiment, the S-CSCF also transmits the timestamp corresponding to the cell identifier to the next-hop network device in addition to the cell identifier. The timestamp indicates the time when the HSS receives and stores the cell identifier in the local database, and the HSS transmits the timestamp to the S-CSCF in a Cx SAA message.

In this embodiment, the step 26 proceeds following the step S25, and the orders of these stems is merely illustrative. Those skilled in the art can appreciate that the S-CSCF may initiate a request to the home subscriber server at any time when it requests the home subscriber server for trusted location information instead of following the step S25.

Similarly the P-CSCF may alternatively acquire the trusted user location information from the HSS through the S-CSCF.

Furthermore, interaction between the application server and the home subscriber server is similar to interaction between the serving-call/session control function and the home subscriber. The Sh Diameter interface between the application server and the home subscriber server will be detailed below.

Firstly in the step S23', the application server requests in a Diameter Sh User Data Request (UDR) command the home subscriber server for user data.

Then in the step 24', the home subscriber server responds with a User Data Answer (UDA) including trusted location information in the user data AVP.

The Sh interface data reference (see Table 7.6.1 of 3GPP 29.328) shall be enhanced to support a new data reference value, that is, the new data reference value shall be included in information transmitted via the Sh interface, and for example, an XML label corresponding to the new data reference value is represented as a trustedCellID, and an operation allowed for the new data reference value is Sh-Pull (an Sh Diameter user data request).

Then in the step S25', the application server receives the Sh UDA with the trustedCellID in the user data AVP and stores it together with other user profile data.

Then, the step that the application server verifies the cell ID in the SIP request for consistency with the cell ID acquired from the home subscriber server is same as the corresponding step described above taking the S-CSCF as an example, and therefore a repeated description thereof will be omitted here.

Furthermore, the Sh interfaces between the online charging system and the home subscriber server and between the offline charging system and the home subscriber server for billing and charging based upon the location information shall also be enhanced.

Specifically in some IMS billing scenarios (e.g., an incoming call, etc.), no location information is available in an online charging Diameter Ro request when the user has not been called. When the online charging system performs charging based upon location information, the online charging system firstly may transmit a request to the home subscriber server to acquire user location information, for example, the online charging system transmits a UDR to request trusted location information of the user, in the step S23".

Then in the step S24", the home subscriber server responds correspondingly with an UDA including the trusted location information in the user data AVP.

The Sh interface data reference between the HSS and the online charging system (see Table 7.6.1 of 3GPP 29.328) shall be enhanced to support a new data reference value, and an XML label is a trustedCellID. An allowed operation is Sh-Pull (an Sh Diameter user data request).

Then in the step S25", the online charging system receives the Sh UDA with the trustedCellID in the user data AVP and stores it together with other UE data.

Thereafter the online charging system uses the trustedCellID for location-based charging for the incoming call.

In another embodiment, the online charging system checks all the time the timestamp of the trustedCellID and performs location-based charging and billing based upon the latest information. The online charging system can set policy rules for the when the trustedCellID expires for respective users, IP-Connectivity Access Network (IP-CAN) and networks.

Similarly in offline charging, the offline charging system requires trusted location information when the offline charging system receives no trustedCellID in a Diameter Rf Accounting Request (ACR). Therefore in the step S23", the offline charging system can transmit a request to the HSS to acquire user location information. Then in the step S24", the HSS responds with a UDA including the trusted location information in the user data AVP. Then in the step S25", the offline charging system acquires the trusted location information.

Furthermore the Diameter Ro and Rf interfaces also shall be enhanced.

For example, in the step S28, the S-CSCF forwards the trusted location information to a next-hop network device which is the online charging system, that is, the S-CSCF forwards the trusted location information to the online charging system through a gateway (e.g., an IP Multimedia Subsystem-Gateway Function, IMS-GWF, etc.) An interface between the S-CSCF and the IMS-GWF is the ISC interface, and an interface between the IMS-GWF and the OSC is the Ro interface. The IMS-GWF performs protocol translation between the S-CSCF and the OSC. In Fig.1, we have omitted the IMS-GWF between the S-CSCF and the OSC as well as corresponding interfaces, and only the Ro interface has been described for the sake of convenience.

That is, the Ro interface has been extended to support a new group of parameters AVP-Trusted-Location-Information including the following sub-AVP:
A trusted cell ID and a timestamp, where the timestamp represents the time when the S-CSCF receives and stores the trusted cell ID in local data base .

In the foregoing embodiment, only the improved Ro interface between the S-CSCF and the online charging system has been described. Furthermore the LTE network element of P-GW and the IMS network element of AS may also transmit the trusted location information AVP to the online charging system via the Ro interface for online charging, and an interface between the online charging system and these network elements is also the improved Ro interface, therefore a repeated description thereof will be omitted here.

Similarly the LTE network elements of S-GW and P-GW and the IMS network elements of S-CSCF, P-CSCF and AS may also transmit the trusted location information AVP to the offline charging system via the Rf interface for offline charging, and the Rf interface is improved similarly to the Ro interface, therefore a repeated description thereof will be omitted here.

Then in the step S29, the online charging system performs location-based online charging based upon the value in the recently acquired trusted location information AVP according to the timestamp.

Furthermore the offline charging system may also include the value in the recently acquired trusted location information AVP into a Charging Data Record (CDR) for offline charging.

The invention has been detailed above from the perspective of the systematic method and will be described below in a block diagram of a device.

Fig.3 illustrates a block diagram of a device according to an embodiment of the invention. Particularly a first device 10 is arranged in a mobility management entity to process location information of a user equipment. The first device 10 includes acquisition means 100 and first providing means 101, where the acquisition means 100 is configured to acquire the location information of the user equipment provided by a base station, and the first providing means 101 is configured to provide the home subscriber server with the location information.

A second device 200 is arranged in a home subscriber server to process location information of a user equipment. The second device 200 includes first reception means 200 and second providing means 201, where the first reception means 200 is configured to receive the location information of the user equipment from a mobility management entity and store the location information in a subscriber database, and to receive from a first network entity related to the location information a request message for requesting the location information, where the request message requests the location information of the user equipment provided by a base station, and the second providing means 201 is configured to provide the location information to the first network entity requesting the location information.

The first network entity related to the location information includes any one or more of a proxy-call/session control function, a serving-call/session control function, an application server, an offline charging system and an online charging system.

A third device 30 is arranged in a second network entity of a core network to process location information of a user equipment. The third device 30 includes transmission means 300 and second reception means 301, where the transmission means 300 is configured to transmit a request message to a home subscriber server to request the location information of the user equipment, where the request message requests the location information of the user equipment generated by a base station, and the second reception means 301 is configured to receive from the home subscriber server the location information, where the location information includes the cell identity of a cell, or the sector identity of a sector, where the user equipment resides.

The second network entity related to the location information includes any one or more of a proxy-call/session control function, a serving-call/session control function, an application server, an offline charging system and an online charging system.

Those ordinarily skilled in the art can appreciate and make other modifications to the disclosed embodiments upon reviewing the description, the disclosure, the drawings and the appended claims. In the claims, the term "comprising/comprises" will not preclude another element(s) and step(s), and the term "a/an" will not preclude plurality. In a practical application of the invention, an element can perform the functions of a plurality of technical features recited in a claim. Any reference numeral in the claims will not be construed as liming the scope of the invention.

## Claims

1. A method, in a home subscriber server of a core network of an internet protocol multimedia subsystem, for processing location information of a user equipment, comprising the steps of:
I. receiving (S21) trusted location information of the user equipment from a mobility management entity and storing the trusted location information in a subscriber database, together with a timestamp, wherein the timestamp represents the time when the trusted location information of the user equipment is received and stored by the home subscriber server;
II. receiving (S23) from a network entity related to the trusted location information a request message for requesting the trusted location information, wherein the request message requests the trusted location information of the user equipment provided by a base station; and
III. providing (S24) the trusted location information to the network entity requesting the trusted location information in a response message, wherein the response message comprises a cell identity indicating a cell, or a sector identity indicating a sector, where the user equipment resides, and the timestamp corresponding to the trusted location information.

2. The method according to claim 1, wherein the response message further comprises an extensible markup language label indicating the cell identity or the sector identity as a trusted cell or sector identity..

3. The method according to any one of claims 1 to 2, wherein the network entity related to the trusted location information comprises any one or more of:
- a proxy-call/session control function;
- a serving-call/session control function;
- an application server;
- an offline charging system; and
- an online charging system.

4. A method, in a network entity of a core network of an internet protocol multimedia subsystem, for processing location information of a user equipment, comprising the steps of:
a. transmitting a request message to a home subscriber server to request the trusted location information of the user equipment, wherein the request message requests the trusted location information of the user equipment generated by a base station; and
b. receiving from the home subscriber server the trusted location information, wherein the trusted location information comprises the cell identity of a cell, or the sector identity of a sector, where the user equipment resides, together with a timestamp, wherein the timestamp represents the time when the trusted location information of the user equipment is received and stored by said home subscriber server.

5. The method according to claim 4, wherein the network entity comprises any one or more of:
- a proxy-call/session control function;
- a serving-call/session control function;
- an application server;
- an offline charging system; and
- an online charging system.

6. The method according to claim 4, wherein when the network entity comprises any one of a proxy-call/session control function, a serving-call/session control function and an application server, the method further comprises steps after the step b:
- receiving from the user equipment a session initiation protocol invite message with its private access network information header comprising a cell identity;
- determining whether the cell identity in the private access network information header is identical to the cell identity or the sector identity comprised in the trusted location information received by the home subscriber server; and
- if they are identical, transmitting the cell identity directly to a next-hop network device;
- otherwise, modifying the cell identity in the private access network information header of the session initiation protocol invite message to the cell identity or the sector identity comprised in the trusted location information received by the home subscriber server, and transmitting the modified session initiation protocol invite message to the next-hop network device.

7. The method according to claim 4, wherein when the network entity comprises any one of a proxy-call/session control function, a serving-call/session control function and an application server, the method further comprises a step after the step b:
- transmitting the trusted location information of the user equipment and the timestamp related to the trusted location information to an online charging system and/or an offline charging system.

8. A device (20), in a home subscriber server of a core network of an internet protocol multimedia subsystem, for processing location information of a user equipment, comprising:
first reception means (200) for receiving trusted location information of the user equipment from a mobility management entity and storing the trusted location information in a subscriber database, together with a timestamp, wherein the timestamp represents the time when the trusted location information of the user equipment is received and stored by said home subscriber server , and for receiving from a network entity related to the trusted location information a request message for requesting the trusted location information, wherein the request message requests the trusted location information of the user equipment provided by a base station; and
second providing means (201) for providing the trusted location information to the network entity requesting the trusted location information in a response message, wherein the response message comprises a cell identity indicating a cell, or a sector identity indicating a sector, where the user equipment resides, and the timestamp corresponding to the trusted location information.

9. The device according to claim 8, wherein the network entity related to the trusted location information comprises any one or more of:
- a proxy-call/session control function;
- a serving-call/session control function;
- an application server;
- an offline charging system; and
an online charging system.

10. A device (30), in a network entity of a core network of an internet protocol multimedia subsystem, for processing location information of a user equipment, comprising:
transmission means (300) for transmitting a request message to a home subscriber server to request the trusted location information of the user equipment, wherein the request message requests the trusted location information of the user equipment generated by a base station, and
second reception means (301) for receiving from the home subscriber server the trusted location information, wherein the trusted location information comprises the cell identity of a cell, or the sector identity of a sector, where the user equipment resides, together with a timestamp, wherein the timestamp represents the time when the trusted location information of the user equipment is received and stored by said home subscriber server.

11. The device according to claim 10, wherein the network entity comprises any one or more of:
- a proxy-call/session control function;
- a serving-call/session control function;
- an application server;
- an offline charging system; and
- an online charging system.

## Patentansprüche

1. Verfahren in einem Heimteilnehmerserver eines Kernnetzes eines Internetprotokoll-Multimediateilsystems zum Verarbeiten von Standortinformationen eines Nutzergerätes, umfassend die folgenden Schritte:
I. Empfangen (S21) vertrauenswürdiger Standortinformationen des Nutzergerätes von einer Mobilitätsverwaltungsinstanz und Speichern der vertrauenswürdigen Standortinformationen in einer Teilnehmerdatenbank zusammen mit einem Zeitstempel, wobei der Zeitstempel die Zeit repräsentiert, zu der die vertrauenswürdigen Standortinformationen des Nutzergeräts durch den Heimteilnehmerserver empfangen und gespeichert werden,
II. Empfangen (S23) einer Anfragenachricht von einer die vertrauenswürdigen Standortinformationen betreffenden Netzinstanz zum Anfragen der vertrauenswürdigen Standortinformationen, wobei die Anfragenachricht die durch eine Basisstation bereitgestellten vertrauenswürdigen Standortinformationen des Nutzergeräts anfragt, und
III. Bereitstellen (S24) der vertrauenswürdigen Standortinformationen an die die vertrauenswürdigen Standortinformationen anfragende Netzinstanz in einer Antwortnachricht, wobei die Antwortnachricht eine eine Zelle anzeigende Zellidentität oder eine einen Sektor anzeigende Sektoridentität, in der/dem sich das Nutzergerät befindet, sowie den den vertrauenswürdigen Standortinformationen entsprechenden Zeitstempel umfasst.

2. Verfahren nach Anspruch 1, wobei die Antwortnachricht ferner eine "Extensible Markup Language"-Markierung umfasst, welche die Zellidentität oder die Sektoridentität als eine vertrauenswürdige Zell-oder Sektoridentität kennzeichnet.

3. Verfahren nach einem der Ansprüche 1 bis 2, wobei die die vertrauenswürdigen Standortinformationen betreffende Netzinstanz eines oder mehrere der Folgenden umfasst:
- eine Proxy-Ruf-/Sitzungssteuerfunktion,
- eine Versorgungsruf-/Sitzungssteuerfunktion,
- einen Anwendungsserver,
- ein Offline-Gebührensystem und
- ein Online-Gebührensystem.

4. Verfahren in einer Netzinstanz eines Kernnetzes eines Internetprotokoll-Multimediateilsystems zum Verarbeiten von Standortinformationen eines Nutzergeräts, umfassend die folgenden Schritte:
a. Übertragen einer Anfragenachricht an einen Heimteilnehmerserver, um die vertrauenswürdigen Standortinformationen des Nutzergeräts anzufragen, wobei die Anfragenachricht die durch eine Basisstation erzeugten vertrauenswürdigen Standortinformationen des Nutzergeräts anfragt, und
b. Empfangen der vertrauenswürdigen Standortinformationen vom Heimteilnehmerserver, wobei die vertrauenswürdigen Standortinformationen die Zellidentität einer Zelle oder die Sektoridentität eines Sektors, in der/dem sich das Nutzergerät befindet, zusammen mit einem Zeitstempel umfasst, wobei der Zeitstempel die Zeit repräsentiert, zu der die vertrauenswürdigen Standortinformationen des Nutzergeräts durch den Heimteilnehmerserver empfangen und gespeichert werden.

5. Verfahren nach Anspruch 4, wobei die Netzinstanz eines oder mehrere der Folgenden umfasst:
- eine Proxy-Ruf-/Sitzungssteuerfunktion,
- eine Versorgungsruf-/Sitzungssteuerfunktion,
- einen Anwendungsserver,
- ein Offline-Gebührensystem und
- ein Online-Gebührensystem.

6. Verfahren nach Anspruch 4, wobei, wenn die Netzinstanz eines von Proxy-Ruf-/Sitzungssteuerfunktion, Versorgungsruf-/Sitzungssteuerfunktion und Anwendungsserver umfasst, das Verfahren nach dem Schritt b ferner Schritte umfasst:
- Empfangen einer Sitzungsinitialisierungsprotokoll-Einladungsnachricht vom Nutzergerät, wobei dessen Privatzugangsnetz-Informationsdatenkopf eine Zellidentität umfasst,
- Bestimmen, ob die Zellidentität im Privatzugangsnetz-Informationsdatenkopf identisch ist mit der Zellidentität oder der Sektoridentität, die in den durch den Heimteilnehmerserver empfangenen vertrauenswürdigen Standortinformationen umfasst ist, und
- falls diese identisch sind, Übertragen der Zellidentität direkt an eine auf einem nächsten Hop liegende Netzeinrichtung,
- andernfalls Modifizieren der Zellidentität im Privatzugangsnetz-Informationsdatenkopf der Sitzungsinitialisierungsprotokoll-Einladungsnachricht auf die Zellidentität oder die Sektoridentität, die in den durch den Heimteilnehmerserver empfangenen vertrauenswürdigen Standortinformationen umfasst ist, und Übertragen der modifizierten Sitzungsinitialisierungsprotokoll-Einladungsnachricht an die auf einem nächsten Hop liegende Netzeinrichtung.

7. Verfahren nach Anspruch 4, wobei, wenn die Netzinstanz eines von Proxy-Ruf-/Sitzungssteuerfunktion, Versorgungsruf-/Sitzungssteuerfunktion und Anwendungsserver umfasst, das Verfahren nach dem Schritt b ferner einen Schritt umfasst:
- Übertragen der vertrauenswürdigen Standortinformationen des Nutzergeräts und des die vertrauenswürdigen Standortinformationen betreffenden Zeitstempels an ein Online-Gebührensystem und/oder ein Offline-Gebührensystem.

8. Einrichtung (20) in einem Heimteilnehmerserver eines Kernnetzes eines Internetprotokoll-Multimediateilsystems zum Verarbeiten von Standortinformationen eines Nutzergeräts, umfassend:
erste Empfangsmittel (200) zum Empfangen vertrauenswürdiger Standortinformationen des Nutzergeräts von einer Mobilitätsverwaltungseinheit und Speichern der vertrauenswürdigen Standortinformationen in einer Teilnehmerdatenbank zusammen mit einem Zeitstempel, wobei der Zeitstempel die Zeit repräsentiert, zu der die vertrauenswürdigen Standortinformationen des Nutzergeräts durch den Heimteilnehmerserver empfangen und gespeichert werden, und zum Empfangen einer Anfragenachricht von einer die vertrauenswürdigen Standortinformationen betreffenden Netzinstanz zum Anfragen der vertrauenswürdigen Standortinformationen, wobei die Anfragenachricht die durch eine Basisstation bereitgestellten vertrauenswürdigen Standortinformationen des Nutzergeräts anfragt, und
zweite Bereitstellungsmittel (201) zum Bereitstellen der vertrauenswürdigen Standortinformationen an die die vertrauenswürdigen Standortinformationen anfragende Netzinstanz in einer Antwortnachricht, wobei die Antwortnachricht eine eine Zelle anzeigende Zellidentität oder eine einen Sektor anzeigende Sektoridentität, in der/dem sich das Nutzergerät befindet, sowie den den vertrauenswürdigen Standortinformationen entsprechenden Zeitstempel umfasst.

9. Einrichtung nach Anspruch 8, wobei die die vertrauenswürdigen Standortinformationen betreffende Netzinstanz eines oder mehrere der Folgenden umfasst:
- eine Proxy-Ruf-/Sitzungssteuerfunktion,
- eine Versorgungsruf-/Sitzungssteuerfunktion,
- einen Anwendungsserver,
- ein Offline-Gebührensystem und
- ein Online-Gebührensystem.

10. Einrichtung (30) in einer Netzinstanz eines Kernnetzes eines Internetprotokoll-Multimediateilsystems zum Verarbeiten von Standortinformationen eines Nutzergeräts, umfassend:
Übertragungsmittel (300) zum Übertragen einer Anfragenachricht an einen Heimteilnehmerserver, um die vertrauenswürdigen Standortinformationen des Nutzergeräts anzufragen, wobei die Anfragenachricht die durch eine Basisstation erzeugten vertrauenswürdigen Standortinformationen des Nutzergeräts anfragt, und
zweite Empfangsmittel (301) zum Empfangen der vertrauenswürdigen Standortinformationen vom Heimteilnehmerserver, wobei die vertrauenswürdigen Standortinformationen die Zellidentität einer Zelle oder die Sektoridentität eines Sektors, in der/dem sich das Nutzergerät befindet, zusammen mit einem Zeitstempel umfasst, wobei der Zeitstempel die Zeit repräsentiert, zu der die vertrauenswürdigen Standortinformationen des Nutzergeräts durch den Heimteilnehmerserver empfangen und gespeichert werden.

11. Einrichtung nach Anspruch 10, wobei die Netzinstanz eines oder mehrere der Folgenden umfasst:
- eine Proxy-Ruf-/Sitzungssteuerfunktion,
- eine Versorgungsruf-/Sitzungssteuerfunktion,
- einen Anwendungsserver,
- ein Offline-Gebührensystem und
- ein Online-Gebührensystem.

## Revendications

1. Procédé, dans un serveur d'abonnés de rattachement d'un coeur de réseau d'un sous-système multimédia sous protocole Internet, de traitement d'informations de localisation d'un équipement utilisateur, comprenant les étapes de :
I. réception (S21) d'informations de localisation fiables relatives à l'équipement utilisateur depuis une entité de gestion de la mobilité et enregistrement des informations de localisation fiables dans une base de données d'abonnés, conjointement avec une horodate, l'horodate représentant l'heure à laquelle les informations de localisation fiables relatives à l'équipement utilisateur sont reçues et enregistrées par le serveur d'abonnés de rattachement ;
II. réception (S23), depuis une entité de réseau liée aux informations de localisation fiables, d'un message de requête pour solliciter les informations de localisation fiables, le message de requête sollicitant les informations de localisation fiables relatives à l'équipement utilisateur fournies par une station de base ; et
III. fourniture (S24) des informations de localisation fiables à l'entité de réseau sollicitant les informations de localisation fiables dans un message de réponse, le message de réponse comprenant une identité de cellule indiquant une cellule ou une identité de secteur indiquant un secteur, où réside l'équipement utilisateur, et l'horodate correspondant aux informations de localisation fiables.

2. Procédé selon la revendication 1, dans lequel le message de réponse comprend en outre une étiquette de langage de balisage extensible indiquant que l'identité de cellule ou l'identité de secteur est une identité de cellule ou de secteur fiable.

3. Procédé selon l'une quelconque des revendications 1 à 2, dans lequel l'entité de réseau liée aux informations de localisation fiables comprend au moins un des éléments dans le groupe constitué par :
- une fonction de commande d'appel/de session mandataire ;
- une fonction de commande d'appel/de session de desserte ;
- un serveur d'application ;
- un système de facturation hors ligne ; et
- un système de facturation en ligne.

4. Procédé, dans une entité de réseau d'un coeur de réseau d'un sous-système multimédia sous protocole Internet, de traitement d'informations de localisation relatives à un équipement utilisateur, comprenant les étapes de :
a. transmission d'un message de requête à un serveur d'abonnés de rattachement pour solliciter les informations de localisation fiables relatives à l'équipement utilisateur, le message de requête sollicitant les informations de localisation fiables relatives à l'équipement utilisateur générées par une station de base ; et
b. réception, depuis le serveur d'abonnés de rattachement, des informations de localisation fiables, les informations de localisation fiables comprenant l'identité de cellule d'une cellule ou l'identité de secteur d'un secteur, où réside l'équipement utilisateur, conjointement avec une horodate, l'horodate représentant l'heure à laquelle les informations de localisation fiables relatives à l'équipement utilisateur sont reçues et enregistrées par ledit serveur d'abonnés de rattachement.

5. Procédé selon la revendication 4, dans lequel l'entité de réseau comprend au moins un des éléments dans le groupe constitué par :
- une fonction de commande d'appel/de session mandataire ;
- une fonction de commande d'appel/de session de desserte ;
- un serveur d'application ;
- un système de facturation hors ligne ; et
- un système de facturation en ligne.

6. Procédé selon la revendication 4, lequel procédé, lorsque l'entité de réseau comprend l'un quelconque des éléments dans le groupe constitué par une fonction de commande d'appel/de session mandataire, une fonction de commande d'appel/de session de desserte et un serveur d'application, comprend en outre les étapes, suite à l'étape b, de :
- réception, depuis l'équipement utilisateur, d'un message de type invite sous protocole d'initialisation de session dont l'en-tête d'informations de réseau d'accès privé comprend une identité de cellule ;
- détermination si l'identité de cellule dans l'en-tête d'informations de réseau d'accès privé est identique ou non à l'identité de cellule ou l'identité de secteur contenue dans les informations de localisation fiables reçues par le serveur d'abonnés de rattachement ; et
- si elles sont identiques, transmission de l'identité de cellule directement à un dispositif de réseau de prochain bond ;
- dans le cas contraire, modification de l'identité de cellule dans l'en-tête d'informations de réseau d'accès privé du message de type invite sous protocole d'initialisation de session pour la remplacer par l'identité de cellule ou l'identité de secteur contenue dans les informations de localisation fiables reçues par le serveur d'abonnés de rattachement, et transmission du message de type invite sous protocole d'initialisation de session modifié au dispositif de réseau de prochain bond.

7. Procédé selon la revendication 4, lequel procédé, lorsque l'entité de réseau comprend l'un quelconque des éléments dans le groupe constitué par une fonction de commande d'appel/de session mandataire, une fonction de commande d'appel/de session de desserte et un serveur d'application, comprend en outre une étape, suite à l'étape b, de :
- transmission des informations de localisation fiables relatives à l'équipement utilisateur et de l'horodate relative aux informations de localisation fiables à un système de facturation en ligne et/ou un système de facturation hors ligne.

8. Dispositif (20), dans un serveur d'abonnés de rattachement d'un coeur de réseau d'un sous-système multimédia sous protocole Internet, destiné à traiter des informations de localisation relatives à un équipement utilisateur, comprenant :
un premier moyen de réception (200) destiné à recevoir des informations de localisation fiables relatives à l'équipement utilisateur depuis une entité de gestion de la mobilité et enregistrer les informations de localisation fiables dans une base de données d'abonnés, conjointement avec une horodate, l'horodate représentant l'heure à laquelle les informations de localisation fiables relatives à l'équipement utilisateur sont reçues et enregistrées par ledit serveur d'abonnés de rattachement, et destiné à recevoir, depuis une entité de réseau liée aux informations de localisation fiables, un message de requête pour solliciter les informations de localisation fiables, le message de requête sollicitant les informations de localisation fiables relatives à l'équipement utilisateur fournies par une station de base ; et
un deuxième moyen de fourniture (201) destiné à fournir les informations de localisation fiables à l'entité de réseau sollicitant les informations de localisation fiables dans un message de réponse, le message de réponse comprenant une identité de cellule indiquant une cellule ou une identité de secteur indiquant un secteur, où réside l'équipement utilisateur, et l'horodate correspondant aux informations de localisation fiables.

9. Dispositif selon la revendication 8, dans lequel l'entité de réseau liée aux informations de localisation fiables comprend au moins un des éléments dans le groupe constitué par :
- une fonction de commande d'appel/de session mandataire ;
- une fonction de commande d'appel/de session de desserte ;
- un serveur d'application ;
- un système de facturation hors ligne ; et
- un système de facturation en ligne.

10. Dispositif (30), dans une entité de réseau d'un coeur de réseau d'un sous-système multimédia sous protocole Internet, destiné à traiter des informations de localisation relatives à un équipement utilisateur, comprenant :
un moyen de transmission (300) destiné à transmettre un message de requête à un serveur d'abonnés de rattachement pour solliciter les informations de localisation fiables relatives à l'équipement utilisateur, le message de requête sollicitant les informations de localisation fiables relatives à l'équipement utilisateur générées par une station de base, et
un deuxième moyen de réception (301) destiné à recevoir, depuis le serveur d'abonnés de rattachement, les informations de localisation fiables, les informations de localisation fiables comprenant l'identité de cellule d'une cellule ou l'identité de secteur d'un secteur, où réside l'équipement utilisateur, conjointement avec une horodate, l'horodate représentant l'heure à laquelle les informations de localisation fiables relatives à l'équipement utilisateur sont reçues et enregistrées par ledit serveur d'abonnés de rattachement.

11. Dispositif selon la revendication 10, dans lequel l'entité de réseau comprend au moins un des éléments dans le groupe constitué par :
- une fonction de commande d'appel/de session mandataire ;
- une fonction de commande d'appel/de session de desserte ;
- un serveur d'application ;
- un système de facturation hors ligne ; et
- un système de facturation en ligne.
